Europäisches Patentamt

European Patent Office

Office européen des brevets

(11) Publication number: **0 351 199 B1**

## EUROPEAN PATENT SPECIFICATION

(45) Date of publication of patent specification: **15.09.93** (51) Int. Cl.⁵: **B60C 9/08**

(21) Application number: **89307053.2**

(22) Date of filing: **11.07.89**

(54) **Heavy duty pneumatic radial tire under high internal pressure.**

<table>
<tr><td>

(30) Priority: **12.07.88 JP 171901/88**

(43) Date of publication of application:
**17.01.90 Bulletin 90/03**

(45) Publication of the grant of the patent:
**15.09.93 Bulletin 93/37**

(84) Designated Contracting States:
**FR GB LU**

(56) References cited:
**EP-A- 0 098 616**
**EP-A- 0 320 290**
**GB-A- 1 109 816**
**US-A- 4 120 338**

**PATENT ABSTRACTS OF JAPAN vol. 9, no. 313 (M-437)(2136) 10 December 1985, & JP-A-60 148701 (TOYO BOSEKI K.K.) 06 August 1985,**

</td><td>

(73) Proprietor: **Bridgestone Corporation**
**1-1, Kyobashi 1-Chome Chuo-Ku**
**Tokyo 104(JP)**

(72) Inventor: **Kadota, Kuninobu**
**5-9-201, Ogawahigashi-cho 3-Chome**
**Kodaira City Tokyo(JP)**
Inventor: **Inada, Norio**
**4-3-310, Ogawahigashi-cho 3-Chome**
**Kodaira City Tokyo(JP)**

(74) Representative: **Whalley, Kevin et al**
**MARKS & CLERK 57/60 Lincoln's Inn Fields**
**London WC2A 3LS (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

## Description

This invention relates to heavy duty pneumatic radial tires used under a high internal pressure for airplanes and the like.

In this type of the tire, since the result of the life renewal is dependent upon the recapping of tread rubber considerably lost under severer use conditions, the durable performances of the bead portion is strongly demanded to be more enhanced.

In case of general-purpose radial tires, a turn up structure in which the carcass ply is merely wound around the bead core from inside toward outside is widely used as a carcass structure. On the contrary, in the tires used under a high internal pressure for airplanes and the like, a so-called up-down structure in which at least one of plural carcass plies is used as an inner carcass wound around the bead core from inside toward outside and at least one of the remaining carcass plies is used as an outer carcass wound around the bead core from outside toward inside along the inner carcass is frequently used as a carcass structure. Because, the up-down structure considerably mitigates excessive shearing force, which is generated between the carcass and the bead core based on a force acting to the turnup portion in a pulling-out direction through internal pressure acting to the carcass during the use under high internal pressure over a long time through the repeated recapping, to thereby advantageously restrain the occurrence of separation failure at this portion.

In case of heavy duty pneumatic radial tires under high internal pressure, particularly airplane radial tires, the loading load is high and the deflection is large, so that the surface pressure at a contact portion with a rim flange becomes high and hence the deformation at this portion becomes particularly large, which is a fundamental problem in the durability of the bead portion.

Especially, when the main carcass reinforcement of the tire is comprised of the up-down structure, the lower part of the bead portion is enclosed with the inner carcass and the outer carcass, so that the rigidity of the bead portion becomes higher and hence the deformation concentrates in the rubber portion between the outer carcass and the rim flange, and consequently the separation failure is apt to be caused between this rubber portion and the outer carcass.

Furthermore, in case of the up-down structure, the compressive deformation is caused in the outer carcass at a bending bead portion under a load, so that the running of the tire under a load repeatedly brings about the above compressive deformation under an overload condition (for example, condition accompanied with the puncture of one of double wheel), whereby there is caused a fear of generating fatigue breakage of cords in the outer carcass.

A tyre comprising the features of the preamble of claim 1 is known, e.g. from US-A-4 120 338.

It is, therefore, an object of the invention to advantageously solve the aforementioned problems and provide a heavy duty pneumatic radial tire under high internal pressure having an improved durability of bead portion.

According to the invention, there is the provision of a heavy duty pneumatic radial tire under high internal pressure comprising as a main body reinforcement plural carcass plies each containing organic fiber cords arranged in parallel with each other and toroidally extending between a pair of bead cores at a cord angle of 70°-90° with respect to an equator of the tire, in which at least one of said carcass plies is wound around said bead core from inside toward outside as an inner carcass and at least one thereof is wound around said bead core from outside toward inside as an outer carcass, characterized in that said cord for said carcass ply is comprised of nylon-6,6 polymer containing not less than 95 mol% of polyhexamethylene adipamide structural unit, and having a strength (S) of 9.0-15 g/d and an initial modulus (M) of not more than 80 g/d, preferably not more than 60 g/d at a dipped cord state treated with an adhesive after the twisting.

The strength S (g/d) at the dipped cord state treated with the adhesive after the twisting is given by the following equation:

$$S \ (g/d) \ = \ S_d/D, \ \text{provided that} \ D \ = \ D_d \times 100/(100 + P_d)$$

when a tensile load at breakage of the cord is $S_d$ (g/d), a correct size measured on the dipped cord (weight calculated by adding a dried weight of a sample with a weight corresponding to standard moisture region) is $D_d$(d) and a dip pick up measured by a dissolving method is $P_d$(%). Moreover, $S_d$, $D_d$ and $P_d$ are measured according to a method of JIS L1017.

Furthermore, the initial modulus M (g/d) is given by an average of 10 or more measured values according to the following equation:

$$M \ (g/d) \ = \ 10 \times W/D$$

after the reading of an initial tensile resistance W (g/d) from a load-elongation curve of the dipped cord drawn at a standard test according to JIS L1017, i.e. the reading of a load W (g/d) at a point intersecting a tangent line at a maximum point of load change to elongation change in the vicinity of original point with a normal line drawn at a point corresponding to 10% elongation from an intersect between the tangent line and abscissa.

The invention will be described with reference to the accompanying drawings, wherein:

Fig. 1 is a schematically sectional view of an embodiment of the airplane tire according to the invention; and

Fig. 2 is a graph showing a calculation mode for initial modulus.

As a result of various studies on the durability of heavy duty pneumatic radial tires under high internal pressure having the up-down structure as a main carcass structure, it has been confirmed that the separation failure of the rubber portion between the outer carcass and the rim flange from the adjoining outer carcass is mainly due to the fact that strain concentrates in the boundary between the rubber portion and the outer carcass based on the rigidity difference therebetween, and the reduction of end count in the carcass ply is effective for mitigating such a rigidity difference.

However, the reduction of end count naturally obliges the increase of carcass ply number required for withstanding to internal pressure, resulting in undesirable increase of tire cost and tire weight.

For this end, it is considered to reduce the carcass ply number by using high strength cords made from aramid or the like, but it has been confirmed that the use of such a cord rather brings about the considerable degradation of the durability under an overload.

Therefore, the inventors have made further studies with respect to the deformation of bead portion and found that such a deformation is largely influenced by not only the strain during the running under a load but also the strain in the inflation of internal pressure.

In general, the fatigue life of the organic fiber cord is low at compression strain rather than tension strain. On the other hand, when using high modulus cords such as aramid cords or the like, since the elongation of the cord is less by nature at the inflation of internal pressure, the strain generated in the cords of the outer carcass under an overload is apt to be shifted to a compression side, resulting in premature occurrence of fatigue breakage.

Therefore, when inversely using low modulus cords, the elongation of the cord at the inflation of internal pressure becomes large and the rather tension strain is created, so that even when the compression strain of the bead portion during the running under a load is added, a fairly large compression strain is not caused in the cord as a whole, and consequently the fatigue of the cord becomes less.

As such a low modulus cord, nylon-6,6 cords are frequently used for tire because the adhesion property to rubber is excellent, which are also widely used in ordinary pneumatic bias tires for airplanes. However, when the conventionally used nylon-6,6 cords are applied to the carcass ply of the radial tire for airplane or the like as they are and the number of cord end count is reduced for preventing the separation failure between the outer carcass and the member adjacent thereto as mentioned above, it has been confirmed that not only the ply number increases to increase the tire weight as previously mentioned, but also the fatigue of the cord is badly affected under the overload.

That is, the increase of the ply number results in the increase of compression strain at an outermost carcass ply separated away from a bending neutral axis at the bending deformation of bead portion (an axis causing no tension and compression deformations), which degrades the fatigue life of the outer carcass under the overload together with the increase of heat build-up due to the increase of bead portion thickness.

In this connection, the inventors have made studies with respect to the low modulus cord and found that high-strength nylon-6,6 cords made from a so-called nylon-6,6 polymer having not less than 95 mol% of polyhexamethylene adipamide structural unit, each having a strength of not less than 9.0 g/d, preferably 9.5-15.0 g/d and an initial modulus of not more than 80 g/d at a dipped cord state treated with an adhesive after the twisting are particularly applied to the carcass ply of the up-down structure and the cord end count in the carcass ply is reduced to improve the durability.

According to the invention, the up-down structure of the carcass is constituted by using the above low modulus and high strength cords and reducing the cord end count without excessively increasing the carcass ply number, whereby the cord fatigue of the carcass ply and the separation failure between the outer carcass and the adjoining outer rubber of bead portion being weak points in the up-down structure are solved to give a bead structure having a strong resistance to the pulling force under high internal pressure and an excellent durability under an overload.

In this case, the object of the invention is confirmed to be attained by reducing a space ratio given by a percentage of a distance between adjoining cords to a distance between adjoining cord centers in the carcass ply as a cord end count within a range of 25% to 60%. When the space ratio is less than 25%, the rigidity difference between the carcass ply and the outer rubber of bead portion can not be mitigated to an extent of preventing the separation failure, while when it exceeds 60%, the carcass strength durable to high internal pressure is insufficient.

The cords for the carcass ply used in the invention are manufactured from high-strength nylon-6,6 yarns according to a method described in Japanese Patent laid open No. 60-38207. The properties of such a yarn are shown in the following Table 1 together with those of usual nylon-6,6 yarn.

Table 1

|  | Comparative Example 1 | Example 1 |
|---|---|---|
| Fineness (d) | 1260 | 1260 |
| Strength (g/d) | 9.0 | 12.5 |
| Elongation at break (%) | 21.0 | 14.1 |
| $\Delta n$ | $59 \times 10^{-3}$ | $62 \times 10^{-3}$ |
| $\Delta n_A - \Delta n_B$ | 0 | $-2.0 \times 10^{-3}$ |

In Table 1, $\Delta n_A$ and $\Delta n_B$ show the following birefringences in the section of the fiber:

$\Delta n_A$ : birefringence of fiber at a position of $r/R = 0.9$

$\Delta n_B$ : birefringence of fiber at a position of $r/R = 0.0$

R : radius of fiber section

r : distance from central axis of fiber section

The distribution of birefringence $\Delta n$ in a section of polyamide fiber obtained by the usual spinning and drawing method has not substantially a difference between outer layer and inner layer as in Comparative Example 1, or tends to be slightly higher in the outer layer. On the other hand, in the polyhexamethylene adipamide fiber used in the cord according to the invention, the birefringence tends to be lower in the outer layer as in Example 1.

In general, the resistance to bending fatigue lowers in the fibers having higher strength by enhancing orientation through high drawing. On the contrary, the fibers used in the carcass ply cord according to the invention have the aforementioned properties, so that the orientation of the outer layer in the fiber is lower than that of the inner layer, and consequently it is considered that the stress concentration is hardly caused in the surface of the fiber and the resistance to bending fatigue is good.

Therefore, the cords for the carcass ply are excellent in the durability to fatigue breakage under the overload in the pneumatic tire, so that in order to achieve the object of the invention or to provide a heavy duty pneumatic radial tire under high internal pressure, it is desirable to be $\Delta n_A - \Delta n_B < 0$, preferably $\Delta n_A - \Delta n_B < -1.0 \times 10^{-3}$.

Moreover, the measurement of $\Delta n$ distribution in the fiber section shown in Table 1 was carried out according to a method described in Japanese Patent laid open No. 60-38207.

The yarns shown in Table 1 can be used within a range of 0.3-0.6 as a twisting coefficient shown by the following equation (1):

$$NT = T \times \sqrt{0.139 \times (D/2)/\rho} \times 10^{-3} \qquad (1)$$

, wherein NT is a twisting coefficient, T is a twisting number (turns/10 cm), D is a total denier and $\rho$ is a specific gravity of cord.

When the twisting coefficient NT is less than 0.3, the resistance to compression fatigue in the cord is poor, while when the twisting coefficient NT exceeds 0.6, the tenacity of the cord undesirably lowers.

Then, the properties of a dipped cord when a twisted cord having a twisting coefficient of 0.46 as an example is treated with a usual RFL adhesive were shown in the following Table 2.

4

Table 2

| | Comparative Example 1 | Example 1 |
|---|---|---|
| structure (denier) | 1260//2/2 | 1260//2/2 |
| twisting number (ply twist/cable twist) | 26 × 26 | 26 × 26 |
| strength (g/d) | 7.9 | 10.2 |
| tenacity (kg) | 42.0 | 54.0 |
| initial modulus (g/d) | 40 | 40 |
| elongation at breakage (%) | 20.0 | 19.0 |
| heat shrinkage (%) (shrinkage at 150°C) | 4.2 | 4.5 |

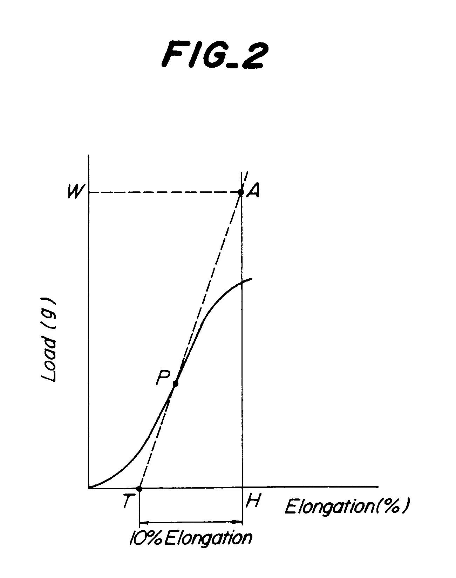

As to the initial modulus shown in Table 2, the load-elongation curve of the dipped cord with respect to initial tensile resistance (g/d) defined in JIS L1017 was first drawn by a solid line in Fig. 2, from which a maximum point P of load change to elongation change near to original point was determined. Then, a tangent line was drawn at this maximum point(shown by dotted lines) to measure an intersect T with the abscissa, and a vertical line was drawn at a point H corresponding to 10% elongation from the point T. Therefore, a load W at an intersect A between the tangent line and the vertical line was read out, from which the initial tensile modulus was calculated according to the following equation (2). The initial modulus is represented by an average of 10 or more measured values.

$$M \text{ (g/d)} = 10 \times W/D \qquad (2)$$

, provided that $D = D_d \times 100/(100 + P_d)$.

The above cords were used for the carcass ply to manufacture various tires.

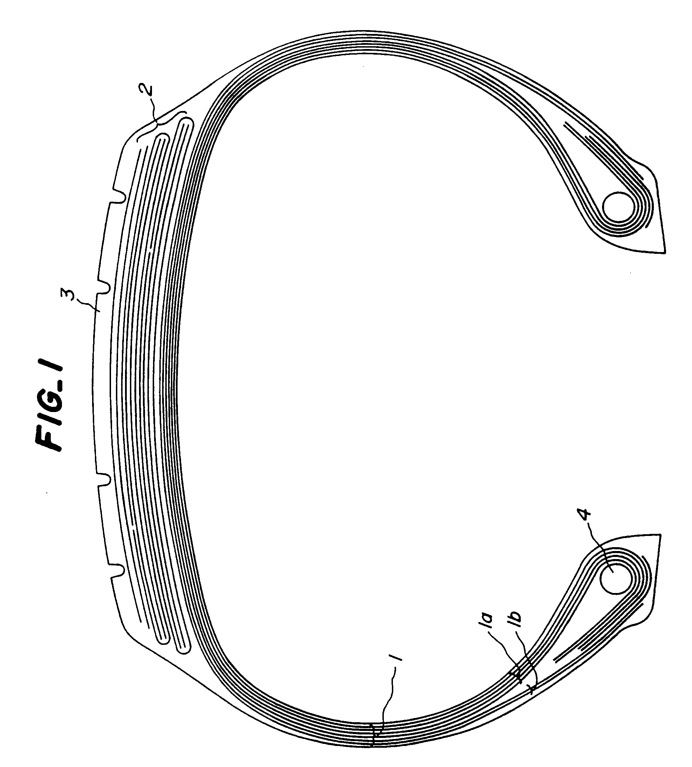

Fig. 1 shows a section of the airplane tire having a tire size of H46×18.0R20 according to the invention, wherein numeral 1 is a carcass, numeral 2 a belt, numeral 3 a tread and numeral 4 a bead core.

The belt 2 has a laminated structure of 10 layers as a whole each containing nylon-6,6 cords (1260d//2/2) arranged at a cord angle of about 20° with respect to the equator of the tire, which comprises two sets each consisting of two cross cord layers having substantially the same width and a folded cord layer having a width larger by about two times than that of the cross cord layer and enclosing the above cross cord layers therein and two cross cord layers superimposed thereon and having free ends at both sides.

The carcass 1 has an up-down structure of six plies comprising four inner carcass plies 1a wound around the bead core 4 from inside toward outside and two outer carcass plies 1b extending along the outside of the turnup portions toward bead toe.

In the following Table 3 are shown results measured on bead durability with respect to the carcass structure of examples according to Fig. 1 and the carcass structure of comparative examples, respectively.

Moreover, the total tenacity of carcass shown in Table 3 means a carcass tenacity of cord strength (cords/kg) × cord end count (cords/5 cm) × ply number per 5 cm. In Table 3, it is set to satisfy the pressure test (no breakage at a pressure higher by 4 times than service pressure) by getting the carcass total tenacity in each carcass structure to approximately same value.

Table 3

| | | Comparative Example A | Example B | Comparative Example C | Example D | Comparative Example E |
|---|---|---|---|---|---|---|
| Cord used | | N66 1260d//2/2 | high-strength N66 1260d//2/2 | N66 1260d//2/2 | high-strength N66 1260d//2/2 | aramid 3000d//3 |
| Number of carcass plies | inner carcass | 4P | 4P | 4P | 4P | 2P |
| | outer carcass | 3P | 2P | 2P | 3P | 1P |
| End count (cords/5 cm) | | 37 | 34 | 43 | 29 | 22 |
| Space ratio of cords (%) | | 33.7 | 39.1 | 22.9 | 48.0 | 51.6 |
| Total tenacity of carcass (kg/5 cm) | | 10878 | 11016 | 10836 | 10962 | 10758 |
| Bead durability | | 100 | 124 | 62 | 141 | 86 |
| Bead durability under overload | | 100 | 138 | 118 | 115 | 35 |

Note: High-strength N66 is a cord of Example 1 in Table 2, and N66 is a cord of Comparative Example 1 in Table 2.

The bead durability was evaluated by a drum test, wherein the test tire was run on a drum over a driving distance of 10,67 km (35,000 ft) and this running was repeated till the occurrence of separation in the bead portion under the following conditions, and represented by an index on the basis that the result of Comparative Example A was 100.

Internal pressure: 14.1 kg/cm$^2$

Load: 24060 kg (53040 Lbs)

6

Speed: 64 km/h (40 MPH)

Furthermore, the bead durability under an overload was evaluated by continuously running the test tire under a load corresponding to 160% of standard load till the occurrence of carcass ply breakage, and represented by an index on the basis that the result of Comparative Example A was 100.

Internal pressure: 14.1 kg/cm$^2$

Load: 32078 kg (70720 Lbs)

Speed: 64 km/h (40 MPH)

Moreover, aramid cords were used for the carcass ply in Comparative Example E and had the properties as shown in the following Table 4.

Table 4

| structure (denier) | 3000 × 3 |
| --- | --- |
| twisting number (ply twist/cable twist) | 20 × 20 |
| strength (g/d) | 16.9 |
| tenacity (kg) | 163 |
| initial modulus (g/d) | 200 |
| elongation at breakage (%) | 7.0 |
| heat shrinkage (%) | 0 |

As mentioned above, according to the invention, the durability to separation failure in the vicinity of outer carcass in the bead portion is largely improved, and also the fatigue breakage of outer carcass under an overload can be prevented, so that the invention can provide tires having an improved bead durability and a high safety.

## Claims

1. A heavy duty pneumatic radial tire under high internal pressure comprising as a main body reinforcement a plurality of carcass plies (1) each containing organic fiber cords arranged in parallel with each other and toroidally extending between a pair of bead cores (4) at a cord angle of 70°-90° with respect to an equatorial plane of the tire, in which at least one of said carcass plies is wound around said bead core from the inside toward the outside as an inner carcass and at least one thereof is wound around said bead core from the outside toward the inside as an outer carcass, characterized in that said cord for said carcass ply is comprised of nylon-6,6 polymer containing not less than 95 mol% of polyhexamethylene adipamide structural unit, and having a strength (S) of 9.0-15 g/d and an initial modulus (M) of not more than 80 g/d at a dipped cord state treated with an adhesive after twisting.

2. A heavy duty pneumatic radial tire as claimed in claim 1, characterized in that said strength (S) is 9.5-15.0 g/d.

3. A heavy duty pneumatic radial tire as claimed in claim 1 or 2, characterized in that said initial modulus (M) is not more than 60 g/d.

4. A heavy duty pneumatic radial tire as claimed in any of claims 1 to 3, characterized in that said cords are arranged in said carcass ply so that a space ratio between centers of adjoining cords in said ply is within a range of 25-60%.

## Patentansprüche

1. Hochleistungs-Radialreifen für hohen Innendruck, der als Grundverstärkung eine Vielzahl von Karkassenlagen (1) aufweist, von denen jede Cordfäden aus organischen Fasern enthalt, wobei diese Cordfäden parallel zueinander angeordnet sind, und sich toroidförmig zwischen zwei Wulstkernen (4) unter einem Cordfadenwinkel von 70 bis 90° bezüglich einer Äquatorialebene des Reifens erstrecken, bei dem mindestens eine der Karkassenlagen von innen nach außen als innere Karkasse um den Wulstkern gewickelt ist, und mindestens eine der Karkassenlagen von außen nach innen als äußere Karkasse um den Wulstkern gewickelt ist, dadurch gekennzeichnet, daß der Cord für die Karkassenlage Nylon-6,6-Polymer mit mindestens 95 Molprozent Polyhexamethylenadipinsäureamid-Grundeinheit aufweist, und im verdrillten, mit Kleber getränkten Zustand eine Festigkeit (S) von 9,0-15 g/d und einen Anfangselastizitätsmodul (M) von höchstens 80 g/d hat.

2. Hochleistungs-Radialreifen gemäß Anspruch 1, dadurch gekennzeichnet, daß die Festigkeit (S) 9,5-15,0 g/d beträgt.

3. Hochleistungs-Radialreifen gemäß Anspruch 1 oder 2, dadurch gekennzeichnet, daß der Anfangselastizitätsmodul (M) höchstens 60 g/d beträgt.

4. Hochleistungs-Radialreifen gemäß irgendeinem der Ansprüche 1 bis 3, dadurch gekennzeichnet, daß die Cordfäden in der Karkassenlage so angeordnet sind, daß das Zwischenraum-Verhältnis zwischen den Mitten von benachbarten Cordfäden in dieser Lage innerhalb eines Bereichs von 25 bis 60% liegt.

**Revendications**

1. Bandage pneumatique radial pour charges lourdes à pression interne élevée, comprenant, à titre de renforcement principal du corps, plusieurs nappes de carcasse (1) contenant chacune des câblés en fibres organiques arrangés parallèlement les uns aux autres et s'étendant en direction toroïdale entre une paire de tringles de talons (4) en formant un angle de câblé de 70°-90° par rapport au plan équatorial du bandage pneumatique, dans lequel au moins une desdites nappes de carcasse est enroulée autour desdites tringles de talons depuis l'intérieur en direction de l'extérieur à titre de carcasse interne et au moins une de celles-là est enroulée autour desdites tringles de talons depuis l'extérieur en direction de l'intérieur à titre de carcasse externe, caractérisé en ce que ledit câblé pour ladite nappe de carcasse comprend du polymère de nylon-6,6 ne contenant pas moins de 95 moles % d'unité structurale de polyhexaméthylène adipamide et ayant une résistance (S) de 9,0-15 g/d, ainsi qu'un module initial (M) qui n'est pas supérieur à 80 g/d à l'état de câblés adhérisés que l'on a traités avec un adhésif après retordage.

2. Bandage pneumatique radial pour charges lourdes selon la revendication 1, caractérisé en ce que ladite résistance (S) est de 9,5-15,0 g/d.

3. Bandage pneumatique radial pour charges lourdes selon la revendication 1 ou 2, caractérisé en ce que ledit module initial (M) n'est pas supérieur à 60 g/d.

4. Bandage pneumatique radial pour charges lourdes selon l'une quelconque des revendications 1 à 3, caractérisé en ce que lesdits câblés sont arrangés dans ladite nappe de carcasse de telle sorte que le taux d'occupation spatiale entre les centres de câblés adjacents dans ladite nappe se situe dans le domaine de 25-60%.

FIG_1

# FIG_2